Europäisches Patentamt

European Patent Office

Office européen des brevets

(11) Veröffentlichungsnummer : **0 374 748 B1**

# (12) EUROPÄISCHE PATENTSCHRIFT

(45) Veröffentlichungstag der Patentschrift :
15.07.92 Patentblatt 92/29

(51) Int. Cl.$^5$ : **C04B 37/00**

(21) Anmeldenummer : **89123209.2**

(22) Anmeldetag : **15.12.89**

(54) **Verfahren zum Fügen von Siliciumnitrid-Formteilen und dafür geeignetes Zwischenstück.**

(30) Priorität : **21.12.88 DE 3842984**

(43) Veröffentlichungstag der Anmeldung :
**27.06.90 Patentblatt 90/26**

(45) Bekanntmachung des Hinweises auf die
Patenterteilung :
**15.07.92 Patentblatt 92/29**

(84) Benannte Vertragsstaaten :
**AT CH DE FR LI SE**

(56) Entgegenhaltungen :
**DE-A- 2 135 648**

(56) Entgegenhaltungen :
**THIN SOLID FILMS, Band 151, 1987, Seiten
223-233, Elsevier Sequoia, NL; X. QIU and E.
GYARMATI: "Composition and propertiesof
SiNx films produced by reactive R.F. magnetron sputtering"
JOURNAL OF THE AMERICAN CERAMIC SO-
CIETY, Band 66, Nr. 8, August 1983, Seiten
C135-C136, Columbus, Ohio, US; K. KABA et
al.:"Diffusional Reaction-Bonding of Si3N4
Ceramics Under High Pressure"
CHEMICAL ABSTRACTS, Band 104, Nr. 18, Mai
1986, Seite 344, Zusammenfassung Nr.
154426w, Columbus, Ohio, US;**

(73) Patentinhaber : **Forschungszentrum Jülich
GmbH
Postfach 1913
W-5170 Jülich (DE)**

(72) Erfinder : **Gyarmati, Ernö, Dr.
Bachdresch 11
W-5172 Linnich-Tetz (DE)**

EP 0 374 748 B1

**Beschreibung**

Die Erfindung bezieht sich auf ein Verfahren zum Fügen von Formteilen mit einer Siliciumnitrid-Oberfläche zumindest im Fügebereich durch Heißpressen bei Drucken von zumindest 10 MPa und Temperaturen über 1500°C, bei dem die Verbindung durch Reaktion von im Hinblick auf die Bildung von $Si_3N_4$ N-überschüssigen und N-unterschüssigen Si-haltigen Schichten längs der Fügenaht erreicht wird und sie umfaßt ein dafür geeignetes Zwischenstück.

Bei diesem aus "Thin Solid Films" 151 (1987) 223-233 bekannten Verfahren wird im Bereich der zusammenwachsenden Grenzschichten für das Vorhandensein eines N-Überschusses und eines N-Unterschusses im Material selbst gesorgt, so daß lediglich durch reaktives Umsortieren und Ineinanderdiffundieren der Ergänzungsschichten ein Zusammenwachsen der Körper über die Grenzschicht hinweg erfolgen kann, wodurch die Naht praktisch zum Verschwinden gebracht wird.

Dabei stören geringfügige Globalabweichungen von der angestrebten Siliciumnitrid-Zusammensetzung $Si_3N_4$ nicht, da bei den hohen Fügetemperaturen überschüssiges Silicium ausdampfen und überschüssiger Stickstoff abdiffundieren können.

Insbesondere wurden auf die polierten Fügeflächen sich ergänzende Siliciumnitrid-Schichten aufgesputtert, wie etwa komplementäre Schichten aus $Si_3N_{5.5}$ und $Si_3N_{2.5}$ oder auch eine an Stickstoff überschüssige Schicht mit einem Siliciumbelag kombiniert.

Besagte Schichten wurden insbesondere aufgesputtert, wobei durch Kontrolle des Stickstoffdrucks sowie weiterer Faktoren, wie Absolutdruck, Abstand, angelegte Spannung usw., deren optimale Bedingungen im Vorversuch geklärt werden, für die Bildung spezieller Zusammensetzungen gesorgt wird.

Es wurde nun überraschenderweise gefunden, daß man die Festigkeit des Körpers über die Naht hinweg durch eine spezielle Anordnung verbessern kann.

Diese Verbesserung wird im wesentlichen dadurch erreicht, daß man längs der Fügeflächen eine Schichtung aus zwei N-unterschüssigen Schichten der Zusammensetzung $SiN_x$ mit $1,3 > x \geqq 0$ und einer dazwischen befindlichen N-überschüssigen Schicht der Zusammensetzung $SiN_x$ mit $x > 1,33$ vorsieht, die sich im wesentlichen zu $Si_3N_4$ ergänzen.

D. h. , erfindungsgemäß wird dafür gesorgt, daß die an die Siliciumnitrid-Fügefläche angrenzende Schicht der verbindungsfördernden Schichtung durch eine in Bezug auf Stickstoff unterstöchiometrische "Siliciumnitrid-Schicht" gebildet wird, die insbesondere der Zusammensetzung $SiN_x$ mit $1,3 > x \geqq 0$ entspricht.

Es wurde überraschenderweise gefunden, daß die Benetzung der Fügeflächen dadurch wesentlich verbessert wird, so daß die Verbindung der Teilkörper über die Fügenaht hinweg erfindungsgemäß erheblich gefördert wird.

Zweckmäßigerweise werden die Außenschichten besagter Schichtung durch Silicium selber oder durch Siliciumnitrid mit einer Zusammensetzung bis zu $SiN_{1.0}$ gebildet.

Die Schichtdicke der Außenschichten ist vorzugsweise halb so groß wie die Schichtdicke der mittleren Schicht und insbsondere beträgt die Gesamtschichtdicke höchstens etwa 3 µm, wobei Dicken um 1 µm bevorzugt werden.

Zweckmäßigerweise wird die Schichtung lediglich auf einer der polierten Fügeflächen vorgesehen. Besonders zweckmäßig ist die Verwendung eines konturgleichen dünnen Siliciumnitrid-Zwischenstücks, wie etwa eines Ringes zum Verbinden von Rohrenden, dessen Fügeflächen beidseits mit besagter Schichtung versehen sind.

Wie in den nachfolgenden Beispielen gezeigt wird, können mit Fügetemperaturen von 1550 bis 1650°C brauchbare Ergebnisse erzielt werden. Höhere Temperaturen sind anwendbar, aber nicht erforderlich, so daß zweckmäßigerweise Fügetemperaturen zwischen 1500 und 1700°C vorgesehen werden.

Die verbindungsfördernde erfindungsgemäße Schichtung entspricht global der folgenden Zusammensetzung:

$$y Si_3N_{4+x} + x Si_3N_{4-y} \rightarrow (x + y)Si_3N_4$$
$$0 \leq x \leq 2$$
$$0 \leq y \leq 4$$

Einfache Beispiele für Schichtkombinationen sind etwa:

1) $Si_3N_{4+2} + 2 Si_3N_{4+1} \rightarrow (1 + 2)Si_3N_4$
$(SiN_2 + 2 SiN \rightarrow 3 SiN_{1.33})$
2) $4 Si_3N_{4+1} + 1 Si_3 \rightarrow 5 Si_3N_4$
$(4 SiN_{1.66} + Si \rightarrow 5 SiN_{1.33})$
3) $2 Si_3N_{4+1.5} + 1.5 Si_3N_{4-2} \rightarrow 3.5 Si_3N_4$
$(2 SiN_{1.83} + 1.5 SiN_{0.67} \rightarrow 3.5 SiN_{1.33})$

2

Die aufzubringenden Schichtdicken lassen sich dann unter Zugrundelegung der spezifischen Gewichte von Silicium, Siliciumnitrid sowie N-überschüssigem und N-unterschüssigem Schicht berechnen.

Ausführungsbeispiele:

Die Fügeflächen von prismatischen $Si_3N_4$-Proben von HP-Qualität (der Fa. Hertel-International, Deutschland) wurden poliert, im Ultraschallbad gereinigt und getrocknet. Die Proben wurden dann in eine Vakuumanlage zum Aufsputtern von $SiN_x$-Schichten gebracht und die polierte Fläche unmittelbar vor dem Aufsputtern mit $Ar^+$-Ionenbeschuß geätzt. Die Sputtervorrichtung umfaßte eine planare HF-Magnetronkathode (Z400 der Fa. Leybold Heraeus, Deutschland).

Die mit besagten Sputterschichten versehenen Proben wurden dann in einer Laborheißpresse mit $Si_3N_4$-Gegenstücken verbunden, deren Preßraum vor dem Heißpressen mehrmals evakuiert bzw. mit $N_2$ geflutet worden war. Vor dem Pressen wurde der Stickstoffdruck jeweils auf 40 KPa eingestellt

Die nachfolgende Tabelle zeigt die Zusammensetzung und Dicke der aufgebrachten Schichtung (Spalte 1) Fügetemperatur und -druck (Spalten 2 und 3) und die erzielten Festigkeitswerte. Die Fügedauer betrug 120 min.

| 1<br>Schichtdicke [$\mu$m]<br>Schichtart | 2<br>Temp. [°C] | 3<br>Druck [MPa] | 4<br>$\bar{\sigma}_{4B}^{RT}$ [MPa] | 5<br>$\dfrac{\sigma(max)}{MPa}$ |
|---|---|---|---|---|
| 0,125Si/1,0SiN$_2$/0,125Si | 1550 | 21 | | |
| 0,125Si/1,0SiN$_2$/0,125Si | 1650 | 21 | 446$\pm$106 | 652 |
| 0,125Si/1,0SiN$_2$/0,125Si | 1550 | 10,5 | 142$\pm$ 91 | |
| 0,125Si/1,0SiN$_2$/0,125Si | 1650 | 10,5 | 468$\pm$113 | 664 |
| 0,3SiN$_{0,8}$/0.6SiN$_{1,86}$/0,3SiN$_{0,8}$ | 1550 | 21 | 228$\pm$102 | |
| 0,3SiN$_{0,8}$/0.6SiN$_{1,86}$/0,3SiN$_{0,8}$ | 1650 | 21 | 360$\pm$142 | 576 |
| 0,3SiN$_{0,8}$/0.6SiN$_{1,86}$/0,3SiN$_{0,8}$ | 1550 | 10,5 | 354$\pm$168 | 623 |
| 0,3SiN$_{0,8}$/0.6SiN$_{1,86}$/0,3SiN$_{0,8}$ | 1650 | 10,5 | 405$\pm$159 | 607 |
| 0,3SiN$_{1,0}$/0.6SiN$_{1,7}$/0,3SiN$_{1,0}$ | 1550 | 21 | 437$\pm$ 87 | 584 |
| 0,3SiN$_{1,0}$/0.6SiN$_{1,7}$/0,3SiN$_{1,0}$ | 1650 | 21 | 399$\pm$ 83 | 554 |

EP 0 374 748 B1

**Patentansprüche**

1. Verfahren zum Fügen von Formteilen mit einer Siliciumnitrid-Oberfläche zumindest im Fügebereich durch Heißpressen bei Drucken von zumindest 10 MPa und Temperaturen über 1500°C, bei dem die Verbindung durch Reaktion von im Hinblick auf die Bildung von $Si_3N_4$ N-überschüssigen und N-unterschüssigen Si-haltigen Schichten längs der Fügenaht erreicht wird,
**dadurch gekennzeichnet,**
daß man längs der Fügeflächen eine Schichtung aus zwei N-unterschüssigen Schichten der Zusammensetzung $SiN_x$ mit $1,3 > x \geqq 0$ und einer dazwischen befindlichen N-überschüssigen Schicht der Zusammensetzung $SiN_x$ mit $x > 1,33$ vorsieht, die sich im wesentlichen zu $Si_3N_4$ ergänzen.

2. Verfahren nach Anspruch 1,
**dadurch gekennzeichnet,**
daß als N-unterschüssige Außenschichten Schichten einer Zusammensetzung von Si bis $SiN_{1,0}$ vorgesehen werden.

3. Verfahren nach Anspruch 1 oder 2,
**dadurch gekennzeichnet,**
daß die Schichtdicke der Außenschichten halb so groß ist wie die Schichtdicke der mittleren Schicht.

4. Verfahren nach einem der vorangehenden Ansprüche,
**dadurch gekennzeichnet,**
daß man eine Schichtung mit einer Gesamtschichtdicke von $\leq 3$ μm, insbesondere von 0,75 bis 1,25 μm vorsieht.

5. Verfahren nach einem der vorangehenden Ansprüche,
**dadurch gekennzeichnet,**
daß man die Schichten aufsputtert.

6. Verfahren nach einem der vorangehenden Ansprüche,
**dadurch gekennzeichnet,**
daß man die Schichtung auf einer der Fügeflächen vorsieht.

7. Verfahren nach einem der vorangehenden Ansprüche,
**dadurch gekennzeichnet,**
daß man zum Fügen ein beidseits mit besagter Schichtung versehenes konturgleiches Zwischenstück verwendet.

8. Verfahren nach einem der vorangehenden Ansprüche,
**dadurch gekennzeichnet,**
daß man eine Fügetemperatur von 1500°C bis 1700°C vorsieht.

9. Konturgleiches Zwischenstück aus Siliciumnitrid zum Verbinden von Siliciumnitrid Fügeflächen,
**gekennzeichnet durch**
eine beidseitige Beschichtung seiner Fügeflächen mit einer Dreischicht aus zwei N-unterschüssigen Schichten der Zusammensetzung $SiN_x$ mit $1,3 > x \geqq 0$ und einer dazwischen befindlichen N-überschüssigen Schicht der Zusammensetzung $SiN_x$ mit $x > 1,33$, die sich im wesentlichen zu $Si_3N_4$ ergänzen.

**Claims**

1. Method for jointing moulded parts with a silicon nitride surface at least in the jointing region by hot-pressing at pressure of at least 10 MPa and temperatures above 1500°C, the connection being achieved by reaction of silicon-containing layers having an excess and a deficiency of nitrogen along the jointing seam in relation to the formation of $Si_3N_4$,
**characterised in that**
there is provided along the jointing faces an arrangement in layers comprising two N-deficient layers of composition $SiN_x$ wherein $1.3 > x \geqq 0$ and situated therebetween an N-excess layer of composition $SiN_x$ wherein $x > 1.33$, said layers substantially complementing each other to form $Si_3N_4$.

2. Method according to claim 1,
**characterised by**
providing layers with a silicon composition up to $SiN_{1,0}$ as the N-deficient outer layers.

3. Method according to claim 1 or 2,
**characterised in that**

5

the thickness of the outer layers is half the thickness of the middle layer.

4. Method according to one of the preceding claims,
**characterised by**
providing an arrangement of layers with an overall layer thickness of < 3 μm, more particularly 0.75 to 1.25 μm.

5. Method according to one of the preceding claims,
**characterised by**
sputtering on the layers.

6. Method according to one of the preceding claims, **characterised by**
providing the arrangement of layers on one of the jointing faces.

7. Method according to one of the preceding claims,
**characterised by**
using for the jointing operation an identically contoured adapter provided on both sides with said arrangement of layers.

8. Method according to one of the preceding claims, **characterised by**
providing a jointing temperature of 1500°C to 1700°C.

9. Identically contoured adapter of silicon nitride for connecting silicon nitride jointing faces,
**characterised by**
applying to both sides of its jointing faces a triple layer comprising two N-deficient layers of composition $SiN_x$ wherein $1.3 > x \geq 0$ and situated therebetween an N-excess layer of composition $SiN_x$ wherein $x > 1.33$, said layers substantially complementing each other to form $Si_3N_4$.


## Revendications

1. Procédé pour joindre des pièces formées avec une surface supérieure de nitrure de silicium au moins dans la zone de jonction, par pressage à chaud sous une pression d'au moins 10 MPa et une température supérieure à 1500°C, au cours duquel on obtient la liaison par réaction de couches, le long de la ligne de jonction renfermant un excès et un défaut d'azote en vue de la formation de $Si_3N_4$,
**caractérisé en ce qu'on**
prévoit le long de la surface de jonction un empilement de deux couches avec l'azote en défaut, de composition $SiN_x$, avec $1,3 > x \geq 0$, et d'une couche avec l'azote en excès, placée entre les deux couches précédentes, de composition $SiN_x$ avec $x > 1,33$, qui pour une part essentielle se reconstituent en $Si_3N_4$.

2. Procédé selon la revendication 1,
**caractérisé en ce qu'on**
utilise comme couches extérieures avec N en défaut des couches composées de Si à $SiN_{1,0}$.

3. Procédé selon la revendication 1 ou 2,
**caractérisé en ce que**
l'épaisseur des couches extérieures est égale à la moitié de celle de la couche intermédiaire.

4. Procédé selon l'une des revendications précédentes,
**caractérisé en ce qu'on**
prévoit un empilement ayant une épaisseur totale inférieure ou égale à 3 μm, en particuleir de 0,75 à 1,25 μm.

5. Procédé selon l'une quelconque des revendications précédentes,
**caractérisé en ce qu'on**
dépose les couches par pulvérisation.

6. Procédé selon l'une quelconque des revendications précédentes, **caractérisé en ce que**
l'empilement est prévu sur une des surfaces de jonction.

7. Procédé selon l'une quelconque des revendications précédentes, **caractérisé en ce qu'on**
utilise pour la jonction une pièce de raccord à contour pareil munie des deux côtés de l'empilement en cause.

8. Procédé selon l'une des revendications précédentes, **caractérisé en ce qu'on**
opère à une température de jonction de 1500°C à 1700°C.

9. Pièce de raccord à contour pareil en nitrure de silicium pour relier des surfaces de jonction en nitrure de silicium, renfermant des deux côtés de sa surface de jonction, un empilement ayant une couche triple comprenant deux couches à azote en défaut, de composition $SiN_x$, avec $1,3 > x >$, 0, et une couche à excès d'azote placée entre les deux précédentes de composition $SiN_x$ avec $x > 1,33$, qui pour une part essentielle se transforme en $Si_3N_4$.